# EUROPÄISCHE PATENTSCHRIFT

(11) **EP 1 130 331 B1**
(45) Veröffentlichungstag und Bekanntmachung des Hinweises auf die Patenterteilung: **12.05.2004**
(21) Anmeldenummer: 01103817.1
(22) Anmeldetag: 16.02.2001
(51) Int. Cl.: F24F 1/00, F24F 1/01, F24F 13/26, F24F 13/065

(54) **Verfahren und Vorrichtung zur Belüftung und Temperierung eines Raumes**
Method and device for the ventilation and the temperature controlling of a room
Procédé et dispositif de ventilation et de climatisation d'un local

(30) Priorität: 03.03.2000 DE 10010119
(43) Veröffentlichungstag der Anmeldung: 05.09.2001
(73) Patentinhaber: KRANTZ-TKT GmbH, 51465 Bergisch-Gladbach (DE)
(72) Erfinder: Makulla, Detlef, Dipl.-Ing., 51491 Overath. (DE); Sodec, Franc, Dr.-Ing., 52146 Würselen (DE)
(74) Vertreter: Bauer, Dirk, Dipl.-Ing. Dipl.-Kfm.

(56) Entgegenhaltungen:
- DE-A- 3 719 134
- DE-A- 4 017 272
- DE-A- 19 826 566
- GB-A- 2 144 212
- US-A- 2 032 692
- US-A- 3 937 132
- US-A- 3 946 647
- US-A- 3 968 936

## Beschreibung

Die Erfindung betrifft ein Verfahren zur Belüftung und Temperierung eines Raumes, bei dem einer Vorrichtung Primärluft zugeführt und in der Vorrichtung von der Primärluft Sekundärluft aus dem Raum induziert und mit der Primärluft vermischt und sodann dem Raum zugeführt wird, wobei dem Raum zusätzlich zu der mit der Sekundärluft gemischten Primärluft unter einer anderen Ausblasrichtung und/oder von einer anderen Stelle der Vorrichtung aus auch reine Primärluft zugeführt wird. Ein derartiges Verfahren ist z.B. in der GB 2 144 212 A offenbart. Gemäß dem vorbekannten Verfahren wird an der Unterseite der diesbezüglichen Vorrichtung von eingeblasener Primärluft ein Sekundärluftstrom induziert, der anschließend als Mischluft aus Primärluft und Sekundärluft in einen Wärmetauscher temperiert wird. Anschließend wird der temperierte Mischluftstrom an der Oberseite der Vorrichtung abgegeben. Zusätzlich hierzu ist die separate Abgabe von reiner Primärluft gleichfalls an der Oberseite der Vorrichtung möglich. Die vorbekannte Verfahrensweise besitzt den Nachteil, dass der durch den Wärmetauscher zu führende Mischluftvolumenstrom sehr groß ist, weshalb ein volumenmäßig großer Wärmetauscher benötigt wird, der entsprechend große Kosten verursacht. Des Weiteren wird für das Umwälzen des großen Mischluftvolumenstroms eine große Ventilatorleistung benötigt, die sich wiederum nachteilig auf den Energieverbrauch der Vorrichtung auswirkt.

Ein weiteres Verfahren ist beispielsweise aus der DE 198 26 566 A1 bekannt. Bei diesem Verfahren kommen ein Wärmetauscher und eine Luftstromerzeugungseinrichtung, beispielsweise in Form einer Induktionsdüsen-Anordnung zur Verwendung, wobei durch Wirkung der Luftstromerzeugungseinrichtung Sekundärluft durch den Wärmetauscher geführt und sodann mit der Primärluft vermischt wieder in den Raum geleitet wird. Die Primärluft besteht typischerweise aus Außenluft, die in einer Zentralanlage in dem Gebäude gefiltert, beheizt oder gekühlt und meist ganzjährig mit ca. 18 bis 20°C den einzelnen Räumen, d.h. den einzelnen Induktionsvorrichtungen, zugeführt wird.

Die Induktionsgeräte zur Durchführung des bekannten Verfahrens werden in der Regel in der Nähe einer Wand oder Brüstung eines Raumes aufgestellt und geben die Zuluft im wesentlichen vertikal nach oben in den Raum ab, wohingegen die dem Wärmetauscher einer derartigen Vorrichtung zugeführte Luft zumeist horizontal aus dem Raum heraus in die Vorrichtung strömt.

Die Aufenthaltszone von Personen befindet sich insbesondere bei Büroräumen, bei denen derartige Lüftungsverfahren angewendet werden, in der Regel in einer Entfernung von ca. 1 bis 1,5 m von der Vorrichtung entfernt im Rauminneren.

Um in der Aufenthaltszone ein zugfreies Klima zu erreichen, wird gemäß der DE 198 26 566 A1 vorgeschlagen, die eingebrachte Luft als Einzelstrahlen in den Raum einzublasen. Aufgrund der Einzelstrahlen soll eine hochinduktive Wirkung erzielt werden, so daß sich eine lokale Mischungszone, insbesondere vor dem Fenster oder vor der Fassade des Raumes, ausbildet, von der aus eine impulsarme Verdrängungsströmung ausgeht, die den Aufenthaltsbereich des Raumes beaufschlagen soll. Hierdurch würden Zugerscheinungen vermieden, wie sie insbesondere dann auftreten, wenn die eingebrachte Zuluft in Form eines flächigen Fassadenstrahls zugeführt wird.

Ein Nachteil des bekannten Verfahrens besteht jedoch darin, daß beispielsweise im Sommer, wenn die dem Raum zugeführte Zuluft gekühlt ist, im Aufenthaltsbereich der Personen nur eine unzureichende Kühlwirkung eintritt. Die hochinduktiven Einzelstrahlen werden nämlich senkrecht oder schräg nach oben in den Raum eingeblasen, wodurch die Fassade bzw. der innere Sonnenschutz gekühlt werden. Weiter im Rauminneren im Aufenthaltsbereich der Personen steht daher weniger Kühlung zur Abfuhr der Körperwärme der Personen bzw. der Computerabwärme zur Verfügung.

Ein weiterer Nachteil tritt bei dem bekannten Verfahren im Heizfall ein. Im Heizfall wird die aus dem Raum angesaugte Sekundärluft mit Hilfe eines Wärmetauschers erwärmt, wodurch in Verbindung mit den senkrecht nach oben gerichteten Ausblasstrahlen eine thermische Abschirmung der Fassade erfolgt. Die Raumströmung wird wesentlich von der Thermik der Zuluftstrahlen beeinflußt, d.h. aufgrund des Austrittsimpulses der Einzelstrahlen nach oben und der höheren Temperatur der gesamten Zuluft gegenüber der Raumluft gehen die zur Fassade parallel verlaufenden Strahlen an der Decke in eine Horizontalströmung über. Besonders im Heizfall verläuft die Luftströmung unter der Decke bis zu Flurwand. Dies führt dazu, daß ein im üblichen Aufenthaltsbereich vor der Brüstung sitzender Raumnutzer sich in der Rückstromzone befindet, so daß er eine bereits stark mit Raumluft gemischte Zuluft mit entsprechend verminderter Qualität erhält.

Selbst wenn einige der Einzelstrahlen direkt auf den Raumnutzer gerichtet würden, so würde es sich dennoch bei der Zuluft entweder um reine Sekundärluft oder ein Gemisch aus Primärund Sekundärluft handeln. Mit Hilfe des bekannten Verfahrens ist somit am Aufenthaltsort der Personen keine hohe Luftqualität zu erreichen.

Der Erfindung liegt die Aufgabe zugrunde, ein Verfahren zur Belüftung und Temperierung eines Raumes vorzuschlagen, mit dem die Luftqualität, insbesondere im Aufenthaltsbereich von Personen, der sich typischerweise in kleinerem oder größerem Abstand vom Ort der Zuluftzufuhr befindet, spürbar verbessert werden kann. Außerdem soll eine Vorrichtung vorgeschlagen werden, mit der sich das erfindungsgemäße Verfahren auf einfache Weise durchführen läßt.

Ausgehend von einem Verfahren der eingangs beschriebenen Art, wird die vorgenannte Aufgabe nach der Erfindung dadurch gelöst, daß die induzierte Sekundärluft vor der Mischung mit der Primärluft temperiert wird.

Mit Hilfe der reinen Primärluft, deren Ausblasrichtung bzw. Austrittsort von der bzw. dem mit der Sekundärluft gemischten Primärluft abweicht, läßt sich die Luftqualität im Aufenthaltsbereich der Person dadurch verbessern, daß die Primärluft speziell auf diesen Aufenthaltsbereich ausgerichtet ist. Der Aufenthaltsbereich liegt gemäß der Erfindung nicht nur im Rückstrombereich einer induzierten Raumluftwalze, sondern kann über die reine Primärluftzufuhr mit qualitativ hochwertiger und aus hygienischer Sicht einwandfreier Luft versorgt werden.

Der durch den Wärmetauscher zu führende Sekundärluftvolumenstrom ist wesentlich kleiner als der aus Sekundärluft und Primärluft bestehende Mischluftvolumenstrom. Letzterer wird bei dem aus der GB 2 144 212 A bekannte Verfahren insgesamt temperiert, weshalb der Wärmetauscher wesentlich größer und damit teurer ausfallen muß.

Mit dem erfindungsgemäßen Verfahren lassen sich zwei getrennte Zuluftströme erzeugen, wobei einer - vorzugsweise in Abhängigkeit von der Außenlufttemperatur - die Temperatur der Primärluft von ca. 16 bis 20°C aufweist und der zweite für den Raum je nach Ansteuerung eines Wärmetauschers individuell in der Temperatur geregelt werden kann.

Mit Hilfe der mit Primärluft gemischten Sekundärluft läßt sich so bei einer nahezu vertikalen Ausblasrichtung dieser Zuluft sowohl im Winter durch entsprechende Beheizung eine Fassadenabschirmung gegenüber Kaltstrahlung und Kaltluftabfall als auch im Sommer durch entsprechende Kühlung eine Fassadenabschirmung gegenüber Wärmestrahlung und Konvektion nach Art eines "inneren Sonnenschutzes" erreichen.

Nach einer Ausgestaltung des erfindungsgemäßen Verfahrens wird dem Arbeitsbereich die reine Primärluft in Form von gerichteten Strahlen zugeführt, wodurch bei der Möglichkeit einer veränderlichen Strahlausrichtung individuellen Bedürfnissen an die Anströmung mit Frischluft entsprochen werden kann.

Die Erfindung weiter ausgestaltend, ist vorgesehen, daß die mit Sekundärluft gemischte Primärluft in der Nähe einer vertikal oder horizontal ausgerichteten Begrenzungsfläche des Raumes im wesentlichen parallel zu dieser Begrenzungsfläche zugeführt wird.

Hierdurch kann der Effekt der Fassadenabschirmung sowohl im Kühlfall als auch im Heizfall besonders wirkungsvoll erreicht werden.

Eine Weiterbildung des Verfahrens besteht darin, daß die reine Primärluft im wesentlichen unter einem Winkel von 45° zur Vertikalen und von einer Begrenzungsfläche des Raumes weg gerichtet zugeführt wird. In diesem Fall läßt sich der typischer Aufenthaltsbereich von Personen in einem Raum besonders gut mit der Primärluft versorgen, wodurch sich eine besonders große Behaglichkeit beim Raumnutzer einstellt.

Eine Vorrichtung zur Belüftung und Temperierung eines Raumes, mit der das erfindungsgemäße Verfahren durchführbar ist, weist einen Primärlufteinlaß auf, über den der Vorrichtung Primärluft zuführbar ist, wobei mit Hilfe von gerichtet strömender Primärluft Sekundärluft induzierbar ist und durch mindestens einen Sekundärlufteinlaß aus dem Raum ansaugbar und, mit Primärluft gemischt, durch mindestens einen Zuluftauslaß wieder an den Raum abgebbar ist und wobei die Vorrichtung einen Wärmetauscher aufweist und dem Raum durch mindestens einen Primärluftauslaß reine Primärluft zuführbar ist. Erfindungsgemäß ist der Wärmetauscher in Strömungsrichtung der Sekundärluft betrachtet vor einem Mischungsschacht angeordnet, in dem die temperierte Sekundärluft mit Primärluft mischbar ist.

Mit Hilfe der reinen Primärluftzufuhr kann insbesondere am Aufenthaltsort von in dem Raum befindlichen Personen die Luftqualität erheblich verbessert werden. Im Vergleich mit Vorrichtungen, die lediglich die Abgabe einer mit Sekundärluft gemischten Primärluft zulassen, wird somit ein wesentlicher Vorteil erzielt. Durch die erfindungsgemäße Anordnung des Wärmetauschers vor dem Mischungsschacht kann der Wärmetauscher klein dimensioniert werden, was sich positiv auf den Bauraum und die Kosten auswirkt.

Eine Ausgestaltung der erfindungsgemäßen Vorrichtung ist durch eine erste Druckkammer gekennzeichnet, in die der Primärlufteinlaß mündet und von der Düsen zur Induktion von Sekundärluft sowie ein zu einer zweiten Druckkammer führender Primärluftkanal ausgehen, wobei die zweite Druckkammer mit mindestens einem Primärluftauslaß versehen ist.

Hierdurch kann eine bauliche Vereinfachung erzielt werden, da die Primärluft sowohl für die reine Ausströmung als auch für die Ausströmung in gemischter Form über lediglich einen Anschlußstutzen der ersten (gemeinsamen) Druckkammer zugeführt werden kann. In dieser Druckkammer kommt es zu einer Aufteilung der Volumenströme für die Induktionswirkung einerseits und die reine Frischluftversorgung andererseits.

Um individuellen Ansprüchen möglichst vieler Raumnutzer gerecht werden zu können, ist es sinnvoll, daß die Austrittsrichtung der reinen Primärluft veränderbar ist.

Ferner wird vorgeschlagen, daß ein Primärluftauslaß ein drehbares Scheibenelement enthält, das mehrere unter einem Winkel zu seiner Drehachse verlaufende Austrittskanäle aufweist, die von der reinen Primärluft durchströmbar sind. Auf konstruktiv einfache Weise läßt sich hiermit ein komfortabel zu bedienender Luftauslaß verwirklichen.

Um die Induktionsdüsen bedarfsweise gänzlich deaktivieren zu können, kann die erste Druckkammer in zwei Räume unterteilt sein, die über mindestens eine verschließbare Öffnung miteinander verbindbar sind, wobei der Primärlufteinlaß und der Primärluftkanal mit dem ersten Raum in Verbindung stehen und die Düsen zur Induktion von Sekundärluft über den zweiten Raum beaufschlagbar sind. Beispielsweise in der Übergangszeit, in der nur ein geringer Bedarf an Heiz- oder Kühlleistung besteht, bzw. bei Abwesenheit der Raumnutzer, d.h. zu Zeiten, wenn es zu keiner Wärmeabgabe der Personen, der Computer oder der Beleuchtung kommt, kann somit durch ein Abschalten der Primärluftdüsen Energie eingespart werden. Auch bei dieser Betriebsweise bleibt bei der Gewährleistung einer Grundbelüftung der Vorteil einer optimalen Frischluftversorgung am Arbeitsplatz erhalten.

Eine besonders vorteilhafte Ausgestaltung der Vorrichtung nach der Erfindung besteht darin, daß die erste Druckkammer ein Unterteil der quaderförmigen Vorrichtung bildet und ein vertikal ausgerichteter Mischungsschacht, einer Brüstung zugewandt, darüber angeordnet ist, wobei Primärluft vertikal von unten in den Mischungsschacht einströmt und Sekundärluft horizontal auf die Brüstung zu gerichtet zunächst einen neben dem Mischungsschacht und oberhalb der ersten Druckkammer angeordneten Wärmetauscher durchströmt und dann in den Mischungsschacht einströmt und die mit Primärluft gemischte Sekundärluft über ein Lüftungsgitter an den Raum abgebbar ist, wobei ein neben dem Wärmetauscher verlaufender Primärluftkanal zu der oberhalb des Wärmetauscher angeordneten zweiten Druckkammer führt, der bündig mit dem Lüftungsgitter des Mischungsschacht abschließt und mit einer Mehrzahl von in Längsrichtung der zweiten Druckkammer und der Vorrichtung verteilt angeordneten Primärluftauslässen versehen ist.

Diesbezüglich ist es besonders vorteilhaft, wenn ein das Lüftungsgitter aufweisende Oberteil des Mischungsschachts und die mit einem Abschnitt des Primärluftkanals sowie dem oder den Primärluftanschlüssen versehene zweite Druckkammer ein gemeinsames Auslaßelement bilden, das von der Vorrichtung entfernbar ist. Eine derartige Ausführung hat Vorteile bei der Montage und gestattet bei einer variablen Länge eines Unterteils des Primärluftkanals die Anpassung der Vorrichtung an die jeweiligen Vorgaben eines Medienversorgungssystems.

Schließlich besteht eine Weiterbildung der Erfindung noch darin, daß die mit Primärluft gemischte Sekundärluft brüstungsnah senkrecht nach oben aus der Vorrichtung abgebbar, die reine Primärluft weiter zum Rauminneren hin, von der Brüstung weg gerichtet, schräg nach oben bis horizontal aus der Vorrichtung abgebbar und Raumluft als Sekundärluft horizontal auf die Brüstung zu in die Vorrichtung einsaugbar ist. Hierdurch kann den Anforderungen nach einer wirkungsvollen Fassadenabschirmung im Sommer und im Winter sowie einer optimalen Frischluftversorgung am Arbeitsplatz am besten entsprochen werden.

Die Erfindung wird nachfolgend anhand mehrerer Ausführungsbeispiele, die in der Zeichnung dargestellt sind, näher erläutert. Es zeigt:
- Fig. 1: einen Querschnitt durch eine erste Ausführungsform;
- Fig. 2: einen Längsschnitt durch die Ausführungsform gemäß Fig. 1;
- Fig. 3: eine Draufsicht auf die Ausführungsform gemäß Fig. 1;
- Fig. 4: einen Querschnitt durch eine alternative Ausführungsform und
- Fig. 5: einen Querschnitt durch eine wiederum andere Ausführungsform.

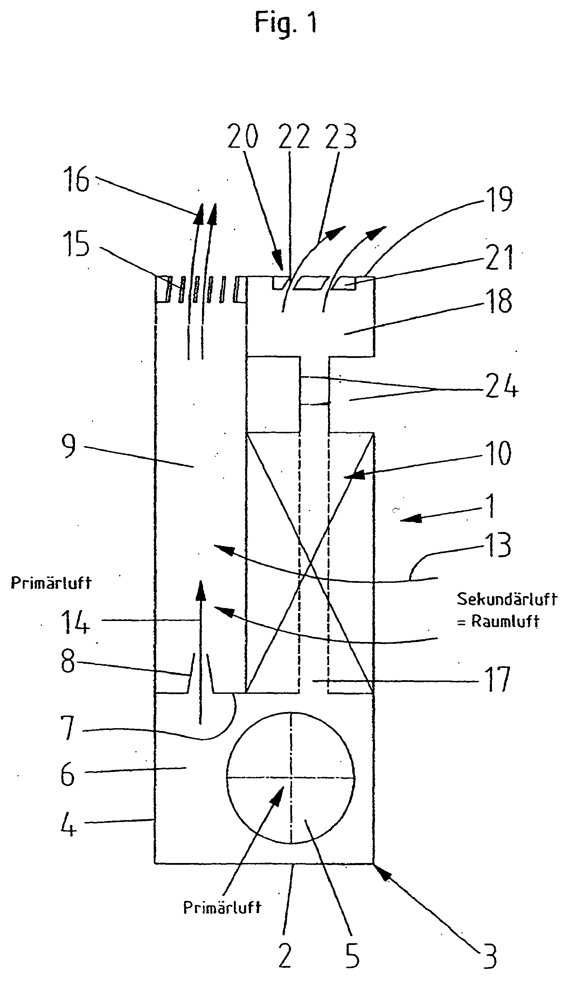

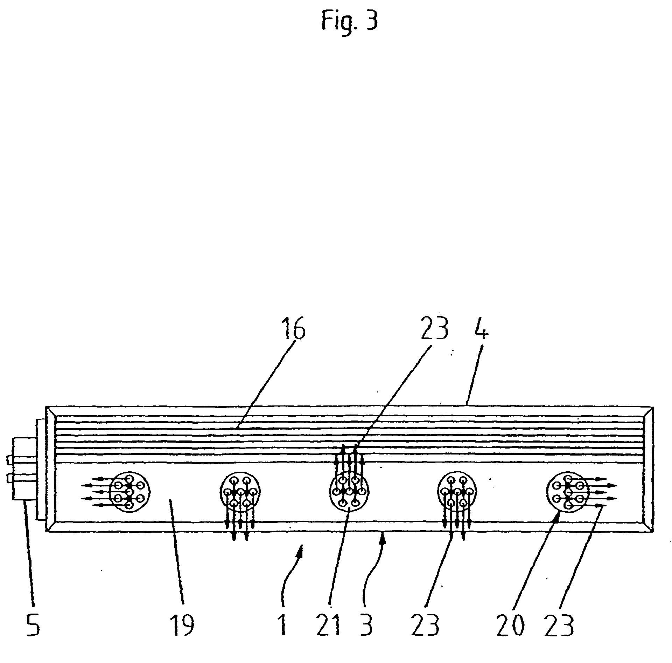

Die Fig. 1 bis 3 zeigen eine insgesamt mit 1 bezeichnete Vorrichtung zur Belüftung und Temperierung eines Raumes, die mit einer Unterseite 2 eines Gehäuses 3 auf einem nicht näher dargestellten Fußboden des Raumes und mit einer Rückwand 4 des Gehäuses 3 an einer ebenfalls nicht näher dargestellten Brüstung des Raumes unterhalb eines Fensters aufgestellt ist.

Die Vorrichtung 1 ist mit einem Primärlufteinlaß 5 versehen, über den die Vorrichtung 1 an ein nicht näher dargestelltes Primärluftversorgungssystem anschließbar ist. Bei der Primärluft handelt es sich um Außenluft, die mit Hilfe einer zentralen Aufbereitungsanlage in Abhängigkeit von der jeweiligen Außentemperatur aufbereitet und mit einer Temperatur von ca. 16 bis 20°C zur Verfügung gestellt wird. Es ist jedoch auch möglich, mit der Primärluft zu heizen. Dies wird jedoch nur in seltenen Fällen erforderlich sein.

Der Primärlufteinlaß 5 mündet in eine erste Druckkammer 6, die sich über die gesamte Grundfläche des Gehäuses 3 erstreckt. Ein Deckblech 7 der Druckkammer 6 ist mit einer Vielzahl von Düsen 8 versehen, die ein Überströmen der unter leichtem Überdruck zugeführten Primärluft aus der Druckkammer 6 in einen darüber angeordneten und sich vertikal nach oben erstreckenden Mischungsschacht 9 erlauben. Der Mischungsschacht 9 wird einerseits von der Rückwand 4 und andererseits von einem Wärmetauscher 10 begrenzt, der sich neben dem Mischungsschacht 9 befindet und sich - wie letzterer - nahezu über die gesamte Länge der Vorrichtung 1 erstreckt. Der Wärmetauscher 10 ist über Anschlüsse 11 mit einem Wärmeübertragungsfluid beaufschlagbar, wobei ein getrenntes Heiz- und Kühlregister vorhanden ist. Alternativ sind auch zwei getrennte Rohrschlangen in einem Lamellenpaket möglich. Über ein dem Raum zugewandtes Öffnungsgitter strömt Raumluft gemäß den Pfeilen 13 als Sekundärluft durch den Wärmetauscher 10 hindurch, wird dort entsprechend den jeweiligen Bedürfnissen temperiert und mit dem aus den Düsen 8 austretenden Primärluftstrahlen in dem Mischungsschacht 9 gemischt. Die mit Primärluft gemischte Sekundärluft tritt durch ein Lüftungsgitter 15, das einen oberen Abschluß des Mischungsschachts 9 bzw. des Gehäuses 3 bildet, gemäß den Pfeilen 16, im wesentlichen in vertikaler Richtung leicht von der Brüstung weg gerichtet, aus der Vorrichtung in den zu belüftenden und zu temperierenden Raum ein.

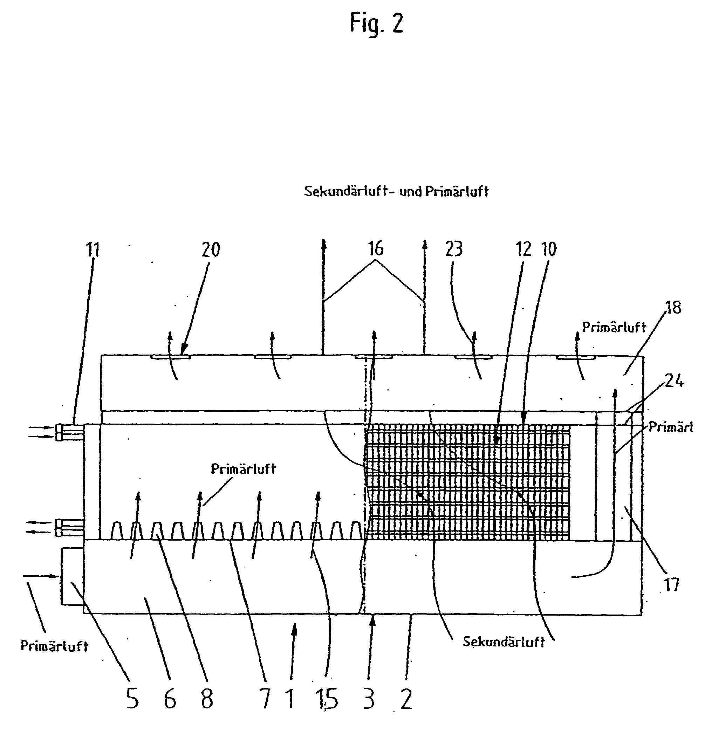

Von dem oberen Deckblech 7 der Druckkammer 6 geht ein Primärluftkanal 17 aus, der sich im Längsschnitt gemäß Fig. 2 am rechten Ende der Vorrichtung 1 befindet und vertikal nach oben geführt ist. Der Primärluftkanal 17 mündet in eine horizontal ausgerichtete zweite Druckkammer 18, die sich im wesentlichen über die gesamte Länge der Vorrichtung 1 erstreckt und mit ihrer Oberseite bündig mit der Oberseite des Lüftungsgitters 15 für die mit Primärluft gemischte Sekundärluft abschließt. Die zweite Druckkammer 18 ist einem Austrittsbereich des Mischungsschachts 9 auf der der Brüstung abgewandten Seite vorgelagert. In die Oberseite 19 der zweiten Druckkammer 18 sind im Abstand zueinander verteilt fünf Primärluftauslässe 20 angeordnet, die durch die reine Primärluft an den Raum unter verschiedenen Austrittsrichtungen abgegeben werden kann. Die Primärluftauslässe 20 weisen jeweils ein in einer horizontalen Ebene drehbares Scheibenelement 21 auf, das mit jeweils sieben in bezug auf seine Drehachse unter einem Winkel von ca. 30° zur Horizontalen geneigt verlaufenden Austrittskanälen 22 versehen ist. Je nach Stellung des jeweiligen Scheibenelements 21 läßt sich die Ausblasrichtung der Primärluft aus der Vorrichtung 1 verändern (vgl. Pfeile 23), wobei die Ausrichtung leicht schräg nach oben stets erhalten bleibt.

In einem oberen Bereich des Primärluftkanals 17 befinden sich zwei Drosseleinrichtungen 24 in Form von Lochblechen, um in der zweiten Druckkammer 18 einen definierten niedrigeren Druck als in der ersten Druckkammer 6 - jeweils in Abhängigkeit von den verwendeten Luftauslässen in der zweiten Druckkammer 18 - herzustellen.

Beim Betrieb der in den Fig. 1 bis 3 gezeigten Vorrichtung 1 wird somit mit Hilfe von zwei getrennten Zuluftströmen zum einen die Temperatur des Raumes in Abhängigkeit von der jeweiligen Erwärmung oder Abkühlung der Sekundärluft individuell geregelt, wobei je nach Außenluft die Primärlufttemperatur zwischen 16 und 20°C liegt. Mit Hilfe eines Teilluftstroms der reinen Primärluft werden einzelne Pirmärluft-Strahlbündel erzeugt, die sich von dem Raumnutzer durch Drehen der Scheibenelemente 21 der Primärluftauslässe 20 individuell einstellen lassen. Der Arbeitsbereich der im Raum befindlichen Personen läßt sich somit mit konditionierter Primärluft, d.h. mit Außenluft, gezielt versorgen, wodurch die Luftqualität am Arbeitsplatz erheblich verbessert werden kann. Außerdem ist durch den brüstungsnahen Zuluftstrom in Form von mit Primärluft gemischter Sekundärluft im Winter eine Fassadenabschirmung gegenüber Kaltstrahlung und Kaltluftabfall und im Sommer gegenüber Wärmestrahlung und Konvektion (innerer Sonnenschutz) möglich, wobei sich die induzierte Sekundärluft im Sommer kühlen und im Winter heizen läßt.

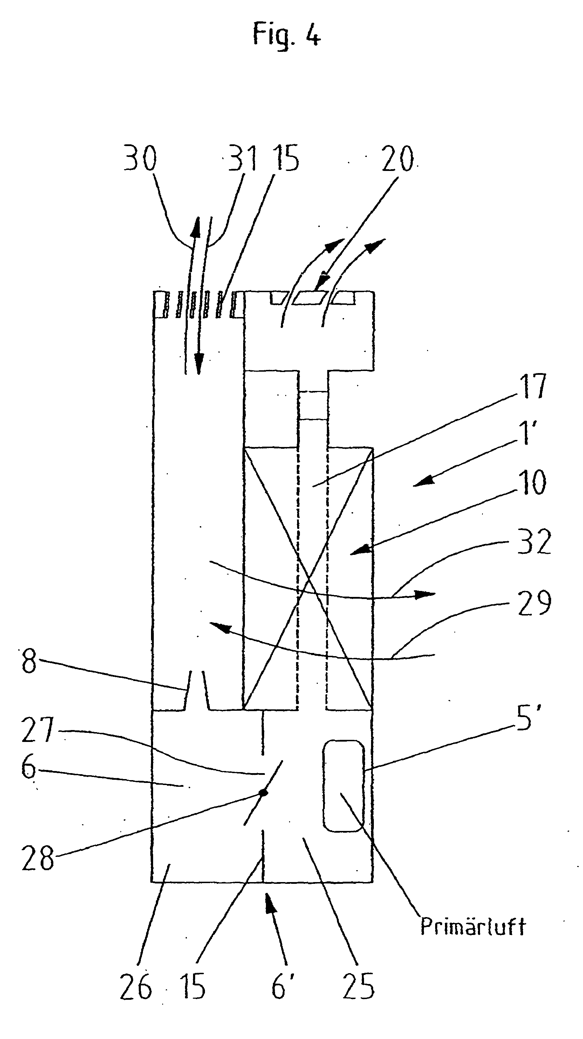

Die in Fig. 4 gezeigte Vorrichtung 1' unterscheidet sich von der Vorrichtung 1 gemäß den Fig. 1 bis 3 durch einen geänderten Primärlufteinlaß 5', der in einen der Brüstung abgewandten Teil 25 der ersten Druckkammer 6' mündet. Von diesem Teil 25 der Druckkammer 6' geht auch der Primärluftschacht 17 vertikal nach oben aus.

Dem Teil 25 der Druckkammer 6' schließt sich in Richtung der Brüstung ein Teil 26 der Druckkammer 6' an, der an seiner Oberseite mit den Düsen 8 versehen ist. Ein Überströmquerschnitt 27 zwischen den beiden Teilen 25 und 26 der Druckkammer 6' ist mit Hilfe einer motorisch verstellbaren Klappe 28 freigebbar bzw. verschließbar.

Die aus den Düsen 8 austretende Primärluft hat im wesentlichen die Aufgabe, die Sekundärluft über den Wärmetauscher 10 zu induzieren, um diese hierdurch heizen oder kühlen zu können. In der Übergangszeit bzw. bei Abwesenheit des Raumnutzers ist lediglich eine geringe Heiz- bzw. Kühlleistung erforderlich, so daß der Wärmetauscher auch ohne Unterstützung der durch die Düsen 8 austretenden Primärluft betrieben werden kann. Er funktioniert in dieser Betriebsweise wie ein konventioneller Konvektor, d.h. im Heizfall strömt Luft gemäß den Pfeilen 29 und 30 von rechts nach links durch den Wärmetauscher 10 und sodann vertikal nach oben aus dem Lüftungsgitter 15. Hingegen strömt die Luft im Kühlfall entsprechend den Pfeilen 31 und 32 von oben durch das Lüftungsgitter 15 in die Vorrichtung 1' ein, um diese von der Brüstung weg gerichtet nach Passieren des Wärmetauschers 10 wieder zu verlassen. Eine freie Konvektion durch den Wärmetauscher 10 wird dadurch ermöglicht, daß die Klappe 28 in Schließstellung gebracht wird, wodurch die Düsenströmung unterbunden wird. Die direkte Frischluftversorgung der Arbeitsplätze über die einstellbaren Primärluftauslässe 20 bleibt in diesem Fall jedoch erhalten, da die Verbindung zwischen dem Primärlufteinlaß 5' und den Primärluftauslässen 20 stets gegeben ist. Mit Hilfe der Abschaltung der Düsen 8 für die Primärluft läßt sich in der Übergangszeit (geringe Heiz- oder Kühlleistung erforderlich) bzw. bei Abwesenheit der Raumnutzer (keine Wärmeabgabe der Personen, der Computer und der Beleuchtung) eine nicht unerhebliche Energieeinsparung erzielen. Auch bei Abwesenheit der Nutzer erfolgt somit eine Grundbelüftung des Raumes.

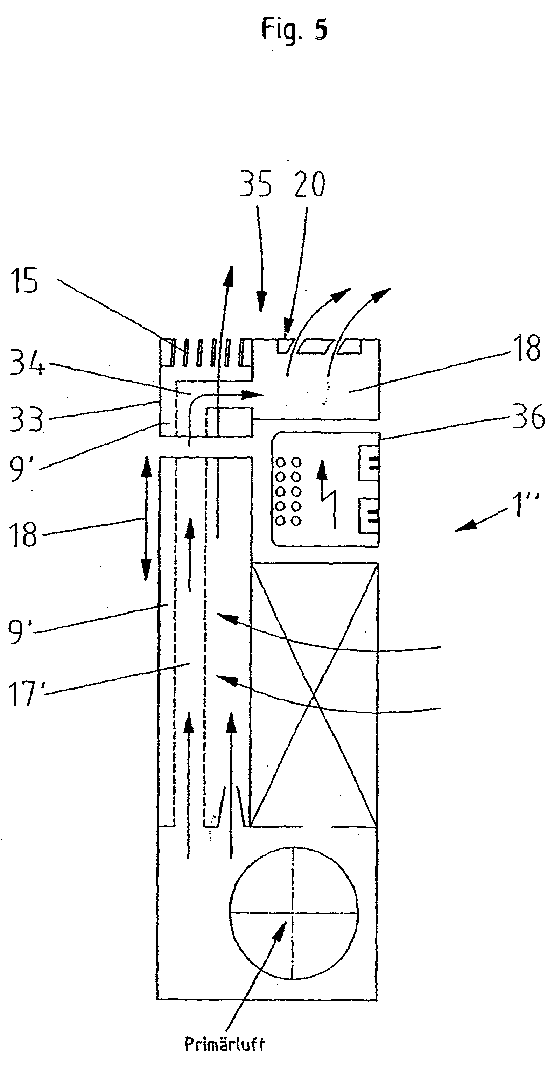

Bei der in Fig. 5 abgebildeten Vorrichtung 1" bilden ein das Lüftungsgitter 15 aufweisendes Oberteil 33 des Mischungsschachts 9' und die mit einem Abschnitt 34 des Primärluftkanals 17' sowie mit den Primärluftauslässen 20 versehene zweite Druckkammer 18 ein gemeinsames Auslaßelement 35, das als Ganzes von der Vorrichtung 1" entfernbar ist. Eine derartige Ausgestaltung hat zum einen Vorteile bei der Montage und gestattet zum anderen bei unterschiedlicher Ausführung der Unterteile des Mischungsschachts 9' sowie des Primärluftkanals 17' die Verwendung stets desselben Auslaßelements 35. Unterhalb der zweiten Druckkammer 18 läßt sich ein Bedien- und Steuerungselement 36 anordnen. Vorteilhafterweise verläuft in diesem Fall der Primärluftkanal 17' innerhalb des Mischungsschachts 9', und zwar sinnvollerweise wiederum in der Nähe einer Stirnseite der Vorrichtung 1".

## Patentansprüche

1. Verfahren zur Belüftung und Temperierung eines Raumes, bei dem einer Vorrichtung Primärluft zugeführt und in der Vorrichtung von der Primärluft Sekundärluft aus dem Rauminneren induziert und mit der Primärluft vermischt und sodann dem Raum zugeführt wird, wobei dem Raum zusätzlich zu der mit der Sekundärluft gemischten Primärluft unter einer anderen Ausblasrichtung und/oder von einer anderen Stelle der Vorrichtung aus auch reine Primärluft zugeführt wird, **dadurch gekennzeichnet, dass** die induzierte Sekundärluft vor der Mischung mit der Primärluft temperiert wird.

2. Verfahren nach Anspruch 1, **dadurch gekennzeichnet, dass** die reine Primärluft in Form von gerichteten Strahlen zugeführt wird.

3. Verfahren nach Anspruch 1 oder 2, **dadurch gekennzeichnet, dass** die mit Sekundärluft gemischte Primärluft in der Nähe einer vertikal oder horizontal ausgerichteten Begrenzungsfläche des Raumes im wesentlichen parallel zu dieser Begrenzungsfläche zugeführt wird.

4. Verfahren nach einem der Ansprüche 1 bis 3, **dadurch gekennzeichnet, dass** die reine Primärluft im wesentlichen unter einem Winkel von 45° zur Vertikalen und von einer Begrenzungsfläche des Raumes weg zugeführt wird.

5. Vorrichtung (1, 1', 1") zur Belüftung und Temperierung eines Raumes, mit einem Primärlufteinlass (5), über den der Vorrichtung (1, 1', 1") Primärluft zuführbar ist, wobei mit Hilfe von gerichtet strömender Primärluft Sekundärluft induzierbar ist, die durch mindestens einen Sekundärlufteinlaß (12) aus dem Raum ansaugbar und, mit Primärluft gemischt, durch mindestens einen Zuluftauslass (15) wieder an den Raum abgebbar ist, und wobei die Vorrichtung einen Wärmetauscher (10) aufweist und dem Raum durch mindestens einen Primärluftauslass (20) reine Primärluft zuführbar ist, **dadurch gekennzeichnet, dass** der Wärmetauscher (10) in Strömungsrichtung der Sekundärluft betrachtet vor einem Mischungsschacht (9) angeordnet ist, in dem die temperierte Sekundärluft mit Primärluft mischbar ist.

6. Vorrichtung nach Anspruch 5, **gekennzeichnet durch** eine Druckkammer (6), in die der Primärlufteinlass (5) mündet und von der Düsen (8) zur Induktion von Sekundärluft sowie ein zu einer zweiten Druckkammer (18) führender Primärluftkanal (17) ausgehen,
wobei die zweite Druckkammer (18) mit mindestens einem Primärluftauslass (20) versehen ist.

7. Vorrichtung nach Anspruch 5 oder 6, **dadurch gekennzeichnet, dass** die Austrittsrichtung der reinen Primärluft veränderbar ist.

8. Vorrichtung nach Anspruch 7, **dadurch gekennzeichnet, dass** ein Primärluftauslass (20) ein drehbares Scheibenelement (21) enthält, das mehrere unter einem Winkel zu seiner Drehachse verlaufende Austrittskanäle (22) aufweist, die von der reinen Primärluft durchströmbar sind.

9. Vorrichtung nach einem der Ansprüche 6 bis 8, **dadurch gekennzeichnet, dass** die erste Druckkammer (5) in zwei Räume (25, 26) unterteilt ist, die über mindestens eine verschließbare Öffnung miteinander verbindbar sind, wobei der Primärlufteinlass (5') und der Primärluftkanal (17) mit dem ersten Raum (25) in Verbindung stehen und die Düsen (8) zur Induktion von Sekundärluft über den zweiten Raum (26) beaufschlagbar sind.

10. Vorrichtung nach einem der Ansprüche 5 bis 9, **dadurch gekennzeichnet, dass** die erste Druckkammer (6, 6') ein Unterteil der quaderförmigen Vorrichtung (1, 1', 1") bildet und ein vertikal ausgerichteter Mischungsschacht (9, 9'), einer Brüstung zugewandt, darüber angeordnet ist, wobei Primärluft vertikal von unten in den Mischungsschacht (9, 9') einströmt und Sekundärluft, horizontal auf die Brüstung zu gerichtet, zunächst einen neben dem Mischungsschacht (9, 9') und oberhalb der ersten Druckkammer (6, 6') angeordneten Wärmetauscher (10) durchströmt und dann in den Mischungsschacht (9, 9') einströmt und die mit Primärluft gemischte Sekundärluft über ein Lüftungsgitter an den Raum abgebbar ist und wobei ein neben dem Wärmetauscher (10) verlaufender Primärluftkanal (17, 17') zu der oberhalb des Wärmetauschers (10) angeordneten zweiten Druckkammer (18) führt, die bündig mit dem Lüftungsgitter (15) des Mischungsschachts (9, 9') abschließt und mit einer Mehrzahl von in Längsrichtung der zweiten Druckkammer (18) und der Vorrichtung (1, 1', 1") verteilt angeordneten Primärluftauslässen (20) versehen ist.

11. Vorrichtung nach Anspruch 9, **dadurch gekennzeichnet, dass** ein die Lüftungsgitter (15) aufweisendes Oberteil (33) des Mischungsschachts (9') und die mit einem Abschnitt des Primärluftkanals (17') versehene zweite Druckkammer (18) ein gemeinsames Auslaßelement (35) bilden, das als Ganzes von der Vorrichtung (1") entfernbar ist.

12. Vorrichtung nach einem der Ansprüche 5 bis 11, **dadurch gekennzeichnet, dass** die mit Primärluft gemischte Sekundärluft brüstungsnah zumindest nach oben aus der Vorrichtung (1, 1', 1") abgebbar ist, die reine Primärluft weiter zum Rauminneren hin, von der Brüstung weg gerichtet, nach oben bis horizontal jeweils an die Vorrichtung (1") abgebbar und Raumluft als Sekundärluft horizontal auf die Brüstung zu in die Vorrichtung (1") einsaugbar ist.

## Claims

1. A method for ventilating and tempering a room, in which primary air is supplied to an apparatus and secondary air from the interior of the room is induced in the apparatus from the primary air and is mixed with the primary air and is then supplied to the room, with the room also being supplied with pure primary air in addition to the primary air mixed with secondary air under another blow-out device and/or from another location of the apparatus, **characterized in that** the induced secondary air is tempered prior to mixture with the primary air.

2. A method as claimed in claim 1, **characterized in that** the pure primary air is supplied in the form of directed jets.

3. A method as claimed in claim 1 or 2, **characterized in that** the primary air mixed with secondary air is supplied close to a vertically or horizontally aligned delimiting surface of the room in a manner substantially parallel to said delimiting surface.

4. A method as claimed in one of the claims 1 to 3, **characterized in that** the pure primary air is supplied substantially under an angle of 45° to the perpendicular and away from a delimiting surface of the room.

5. An apparatus (1, 1', 1") for ventilating and tempering a room, comprising a primary air inlet (5) via which primary air can be supplied to the apparatus (1, 1', 1"), with secondary air being inducible with the help of primary air flowing in a directed manner, which secondary air can be sucked off from the room by means of at least one secondary air inlet (12) and, mixed with primary air, can be supplied again to the room through at least one supply air outlet (15), and with the apparatus comprising a heat exchanger (10) and the room being supplyable with pure primary air by at least one primary air outlet (20), **characterized in that** the heat exchanger (10), when seen in the direction of flow of the secondary air, is arranged in front of a mixing shaft (9) in which the tempered secondary air can be mixed with primary air.

6. An apparatus as claimed in claim 5, **characterized by** a pressure chamber (6) into which the primary air inlet (5) opens and from which emerge nozzles (8) for the induction of secondary air and a primary air conduit (17) leading to a second pressure chamber (18), with the second pressure chamber (18) being provided with at least one primary air outlet (20).

7. An apparatus as claimed in claim 5 or 6, **characterized in that** the direction of exit of the pure primary air is adjustable.

8. An apparatus as claimed in claim 7, **characterized in that** a primary air outlet (20) comprises a rotatable disk element (21) which comprises several outlet conduits (22) which extend under an angle to its rotational axis and which can be flowed through by pure primary air.

9. An apparatus as claimed in one of the claims 6 to 8, **characterized in that** the first pressure chamber (5) is subdivided into two chambers (25, 26) which can be connected with each other via at least one closeable opening, with the primary air inlet (5') and the primary air conduit (17) being in connection with the first room (25) and the nozzles (8) for the induction of secondary air being pressurizable via the second room (26).

10. An apparatus as claimed in one of the claims 5 to 9, **characterized in that** the first pressure chamber (6, 6') forms the lower part of the cuboid apparatus (1, 1', 1") and a vertically aligned mixture shaft (9, 9') which faces a parapet is arranged above the same, with primary air flowing vertically from below into the mixture shaft (9, 9') and secondary air, horizontally facing the parapet, flowing through a heat exchanger (10) arranged adjacent to the mixing shaft (9, 9') and above the first pressure chamber (6, 6'), and then flowing into the mixture shaft (9, 9') and the secondary air mixed with primary air being deliverable via a ventilating grate to the room and with a primary air conduit (17, 17') which extends adjacent to the heat exchanger (10) leading to a second pressure chamber (18) which is flush mounted with the ventilating grate (15) of the mixing shaft (9, 9') and is provided with a plurality of primary air outlets (20) which are arranged in a distributed manner in the longitudinal direction of the second pressure chamber (18) and the apparatus (1, 1', 1").

11. An apparatus as claimed in claim 9, **characterized in that** an upper part (33) of the mixing shaft (9') comprising a ventilating grate (15) and the second pressure chamber (18) provided with a section of the primary conduit (17') form a common outlet element (35) which in its entirety can be removed from the apparatus (1").

12. An apparatus as claimed in one of the claims 5 to 11, **characterized in that** the secondary air mixed with primary air can be supplied close to the parapet at least upwardly from the apparatus (1, 1', 1"), the pure primary air further towards the interior of the room directed away from the parapet and upwardly up to horizontally to the apparatus (1") and room air can be sucked into the apparatus (1") as secondary air horizontally towards the parapet.

## Revendications

1. Procédé pour la ventilation et l'équilibrage de la température d'une pièce, dans lequel de l'air primaire est amené à un dispositif et de l'air secondaire est attiré par induction par l'air primaire à partir de l'intérieur de la pièce et mélangé à l'air primaire puis amené dans la pièce, de l'air primaire pur étant également amené dans la pièce, en plus de l'air primaire mélangé à l'air secondaire, dans une autre direction de soufflage et/ou à partir d'un autre endroit du dispositif, **caractérisé en ce que** l'air secondaire attiré par induction est tempéré par le mélange avec l'air primaire.

2. Procédé selon la revendication 1, **caractérisé en ce que** l'air primaire pur est amené sous la forme de jets dirigés.

3. Procédé selon la revendication 1 ou 2, **caractérisé en ce que** l'air primaire mélangé à l'air secondaire est amené à proximité d'une surface de délimitation de la pièce orientée à la verticale ou l'horizontale de manière sensiblement parallèle à cette surface de délimitation.

4. Procédé selon l'une quelconque des revendications 1 à 3, **caractérisé en ce que** l'air primaire pur est amené sensiblement sous un angle de 45° par rapport à la verticale et en s'écartant d'une surface de délimitation de la pièce.

5. Dispositif (1, 1', 1") pour l'aération et l'équilibrage de la température d'une pièce, avec une entrée d'air primaire (5) qui peut amener de l'air primaire au dispositif (1, 1', 1"), dans lequel le flux directionnel d'air primaire peut induire une arrivée d'air secondaire qui peut être aspiré dans la pièce par au moins une entrée d'air secondaire (12), mélangé à l'air primaire et renvoyé dans la pièce par au moins une sortie d'air de ventilation (15), et dans lequel le dispositif présente un échangeur de chaleur (10) et de l'air primaire pur peut être amené dans la pièce par au moins une entrée d'air primaire (20), **caractérisé en ce que** l'échangeur de chaleur (10) est disposé, vu dans le sens de circulation de l'air secondaire, avant une gaine de mélange (9) dans laquelle l'air secondaire tempéré peut être mélangé à de l'air primaire.

6. Dispositif selon la revendication 5, **caractérisé en ce qu'**il comporte une chambre de pression (6) dans laquelle l'entrée d'air primaire (5) débouche et de laquelle partent des buses (8) servant à l'induction d'air secondaire ainsi qu'un canal d'air primaire (17) menant à une seconde chambre de pression (18), la seconde chambre de pression (18) étant pourvue d'au moins une sortie d'air primaire (20).

7. Dispositif selon la revendication 5 ou 6, **caractérisé en ce que** la direction de sortie de l'air primaire pur est modifiable.

8. Dispositif selon la revendication 7, **caractérisé en ce qu'**une sortie d'air primaire (20) comporte un élément en forme de disque rotatif (21) qui possède plusieurs canaux de sortie (22) formant un angle par rapport à son axe de rotation et qui peuvent être parcourus par de l'air primaire pur.

9. Dispositif selon l'une quelconque des revendications 6 à 8, **caractérisé en ce que** la première chambre de pression (5) est partagée en deux compartiments (25, 26) qui peuvent être mis en communication l'un avec l'autre par au moins une ouverture pouvant être fermée, l'entrée d'air primaire (5') et le canal d'air primaire (17) communiquant avec le premier compartiment (25) et les buses (8) servant à l'induction d'air secondaire pouvant recevoir de l'air secondaire par le second compartiment (26).

10. Dispositif selon l'une quelconque des revendications 5 à 9, **caractérisé en ce que** la première chambre de pression (6, 6') forme une partie inférieure du dispositif (1, 1', 1") carré et une gaine de mélange (9, 9') verticale, orientée vers un appui, est disposée pardessus, de l'air primaire entrant verticalement par le bas dans la gaine de mélange (9, 9') et de l'air secondaire, dirigé horizontalement vers l'appui, parcourant d'abord un échangeur de chaleur (10) disposé à côté de la gaine de mélange (9, 9') et au-dessus de la première chambre de pression (6, 6' ) et pénétrant ensuite dans la gaine de mélange (9, 9') et l'air secondaire mélangé à de l'air primaire pouvant être amené dans la pièce à travers une grille d'aération, et un canal d'air primaire (17, 17') passant à côté de l'échangeur de chaleur (10) menant à la seconde chambre de pression (18) disposée au-dessus de l'échangeur de chaleur (10), qui se termine de niveau avec la grille d'aération (15) de la gaine de mélange (9, 9') et qui est pourvue d'une pluralité de sorties d'air primaire (20) réparties dans le sens longitudinal de la seconde chambre de pression (18) et du dispositif (1, 1', 1").

11. Dispositif selon la revendication 9, **caractérisé en ce qu'**une partie supérieure (33) de la gaine de mélange (9') présentant la grille d'aération (15) et la seconde chambre de pression (18) pourvue d'un tronçon du canal d'air primaire (17') forment un élément de sortie commun (35) qui peut être retiré d'un seul tenant du dispositif (1").

12. Dispositif selon l'une quelconque des revendications 5 à 11, **caractérisé en ce que** l'air secondaire mélangé à l'air primaire peut être rejeté hors du dispositif (1, 1', 1") près de l'appui au moins vers le haut, l'air primaire pur peut être rejeté plus loin vers l'intérieur de la pièce et en s'éloignant de l'appui, entre la direction vers le haut et l'horizontale au niveau du dispositif (1"), et l'air de la pièce servant d'air secondaire peut être aspiré horizontalement dans le dispositif (1") en direction de l'appui.
